(19) **Europäisches Patentamt**

**European Patent Office**

**Office européen des brevets**

(11) Veröffentlichungsnummer: **0 363 513 B1**

(12) **EUROPÄISCHE PATENTSCHRIFT**

(45) Veröffentlichungstag der Patentschrift: **16.02.94**

(51) Int. Cl.5: **H04L 7/02**

(21) Anmeldenummer: **88117055.9**

(22) Anmeldetag: **13.10.88**

(54) **Verfahren und Schaltungsanordnung zum Empfang eines binären Digitalsignals.**

(43) Veröffentlichungstag der Anmeldung:
**18.04.90 Patentblatt 90/16**

(45) Bekanntmachung des Hinweises auf die
Patenterteilung:
**16.02.94 Patentblatt 94/07**

(84) Benannte Vertragsstaaten:
**AT BE CH DE FR GB IT LI NL SE**

(56) Entgegenhaltungen:
**EP-A- 0 168 330**
**EP-A- 0 260 632**
**WO-A-88/05236**
**DE-B- 1 221 671**
**GB-A- 2 143 407**

(73) Patentinhaber: **SIEMENS AKTIENGESELL-SCHAFT**
**Wittelsbacherplatz 2**
**D-80333 München(DE)**

(72) Erfinder: **Dragotin, Alexander, Dipl.-Ing.**
**Edelweiss-Strasse 177**
**D-8039 Puchheim(DE)**

Rank Xerox (UK) Business Services
(3.10/3.09/3.3.3)

## Beschreibung

Die Erfindung bezieht sich auf ein Verfahren zum Empfang eines binären Digitalsignals, das auch Phasensprünge aufweisen darf, für eine Anordnung mit Elementen annähernd konstanter Laufzeit unter Verwendung eines Taktes, dessen Frequenz gleich oder plesiochron zur Bitrate des Digitalsignals und dessen Phasendifferenz gegenüber dem Digitalsignal beliebig ist.

Aus der deutschen Offenlegungsschrift DE 34 41 501 A1 ist bereits eine Schaltungsanordnung zum Regenerieren und Synchronisieren eines Digitalsignals bekannt, die Phasenschwankungen der ankommenden Signalbits ausgleicht. Dazu enthält sie eine Reihenschaltung aus einer steuerbaren Verzögerungsleitung und einer Entscheidungslogik. Letztere ist über eine erste und eine zweite Steuerleitung und die steuerbare Verzögerungsleitung ist über Adressenleitungen an eine Verzögerungsregeleinheit angeschlossen. Die Entscheidungslogik wird über eine Taktleitung mit einem Systemtakt versorgt, dessen Frequenz der Bitrate des zu regenerierenden und synchronisierenden Digitalsignals entspricht.

Bei einem idealen binären Digitalsignal liegen die ansteigenden und abfallenden Flanken in einem festen Raster, das durch die Periode der Taktfrequenz vorgegeben ist. Jede Abweichung von Flanken aus diesem Raster wird als Jitter bezeichnet. Innerhalb definierter Grenzen darf dieser beim Empfang nicht zu einem Informationsfehler führen.

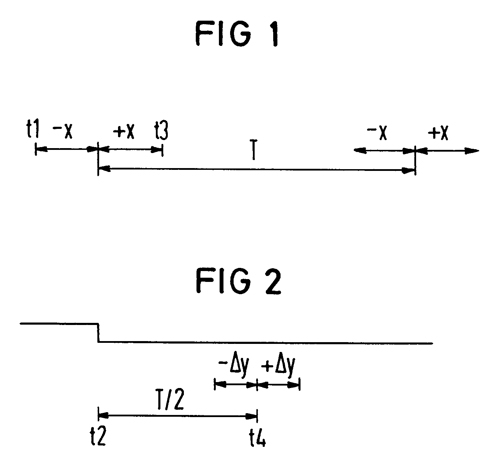

Beim Jitter können zwei grundsätzliche Arten unterschieden werden. Die erste sind Abweichungen der Zeitpunkte zweier aufeinanderfolgender Flanken von dem vorgegebenen Raster, die zweite Art sind sich langsam aufbauende Phasenverschiebungen, die zu einer Zeitverschiebung von mehr als einer Periode führen können. Fig. 1 zeigt eine Periode T der Taktfrequenz mit einem zulässigen Jitterbereich -x und +x der Impulsflanken.

Für einen trägheitslosen Phasenausgleich kann nur eine Flanke Bezugspunkt für das Eintreffen eines neuen Impulses des Digitalsignals sein. Tritt diese nach Fig. 2 zum Zeitpunkt t2 auf, dann wird eine halbe Periode T/2 der Taktfrequenz gewartet, bis zum Zeitpunkt t4 der Impuls empfangen wird. Die Abweichungen, die bei der Ermittlung der Zeit T/2 eintreten können, sind mit Zeitabschnitten $+\Delta y$ und $-\Delta y$ berücksichtigt.

Trifft die Flanke zum Zeitpunkt t3 ein, dann ist ein Empfang nur möglich, wenn

$$T/2 + \Delta y < T - 2x. \qquad (1)$$

Trifft die Flanke dagegen zum Zeitpunkt t1 ein, dann gilt für einen einwandfreien Empfang

$$T/2 - \Delta y > 2x. \qquad (2)$$

Der Erfindung liegt die Aufgabe zugrunde, ein Verfahren und eine Schaltungsanordnung zum trägheitslosen Empfang eines binären Digitalsignals mit wechselnder Phasenlage anzugeben.

Ausgehend von einem Verfahren der einleitend geschilderten Art wird diese Aufgabe erfindungsgemäß mit den im Anspruch 1 angegebenen Verfahrensschritten gelöst.

Eine der Ableitung von Impulsen dienende Flanke wird auch als wirksame Flanke bezeichnet.

Die Abweichung $\Delta y$ hängt einmal von der Grund- bzw. Zusatzlaufzeit $\Delta t1$ ab, die durch die Zahl n der Takte als Zeitabschnitt T/n ausgedrückt werden kann. Zum anderen hängt sie von der Genauigkeit $\delta$ ab, mit der der Zeitabschnitt T/2 meßbar ist. Dies kann über eine feste Anzahl von Gatterlaufzeiten erfolgen. Es ergibt sich für die Abweichung

$$\Delta y = T/n + \delta \cdot T/2 \qquad (3)$$

Aus (1), (2) und (3) ergibt sich:

$$x = T \, \frac{n(1-\delta)-2}{4n} \qquad (4)$$

Das erfindungsgemäße Verfahren läßt sich bei synchron arbeitenden Einrichtungen einsetzen. Dabei wird ein einwandfreier Empfang der Datensignale durch Ausgleich einer beliebigen Phasenlage ermöglicht. Dies Verfahren wirkt als Taktrückgewinnung.

Eine weitere Anwendungsmöglichkeit ist eine Blockvermittlung, bei der eine Synchronisierung der Taktfrequenzen nicht notwendig ist. Das Verfahren kann angewendet werden, um eine sich wegen der Taktfrequenzunterschiede kontinuierlich verändernde Phase auszugleichen. Es kann aber auch benutzt werden, wenn die verschiedenen Informationsblöcke verschiedene Phasenlagen haben.

Soll dieses Verfahren in einer integrierten Schaltung durchgeführt werden, in der aufgrund von Exemplarstreuungen und Betriebstoleranzen die Grund- bzw. Zusatzlaufzeiten und die Laufzeiten in allen anderen Elementen in einem definierten Bereich liegen, muß ein Ausgleich der Änderung der Laufzeit der Elemente erfolgen, damit die wirksame Flanke des Einlesetaktes gegenüber der wirksamen Flanke des Digitalsignals um etwa eine halbe Taktperiode T/2 verzögert eintrifft.

Hinsichtlich der Schaltungsanordnung wird die Aufgabe durch die Merkmale des Anspruches 6 gelöst.

Anhand von Ausführungsbeispielen wird die Erfindung nachstehend näher erläutert:

Fig. 1    dient einer Erläuterung des Jitters,

Fig. 2    zeigt einen Zeitpunkt des Impulsempfangs,

Fig. 3    zeigt ein Prinzipschaltbild für eine Erläuterung des erfindungsgemäßen Verfahrens für konstante Laufzeiten,

Fig. 4    zeigt ein Prinzipschaltbild für eine Erläuterung des erfindungsgemäßen Verfahrens für schwankende Laufzeiten,

Fig. 5    zeigt ein Schaltbild einer realen Anordnung nach Fig. 4 und

Fig. 6    zeigt ein Schaltbild eines praktischen Ausführungsbeispiels nach Fig. 3.

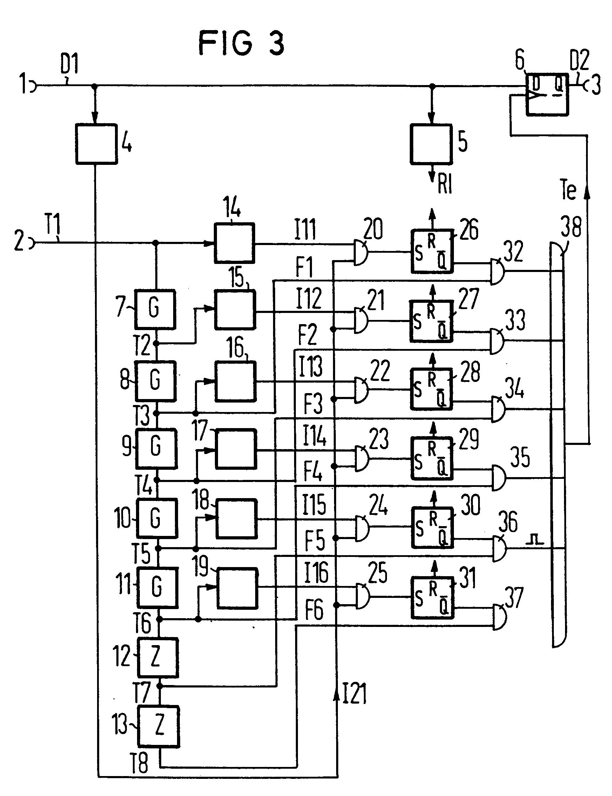

Fig. 3 zeigt ein Prinzipschaltbild einer Anordnung zur Durchführung des Verfahrens bei konstanten Laufzeiten. Die Anordnung enthält ein D-Flipflop 6, eine Anordnung 4 zur Ableitung eines kurzen Abfrageimpulses I21 und eine Anordnung 5 zur Ableitung eines Rücksetzimpulses RI aus der wirksamen Flanke eines Digitalsignals D1, Grund-Laufzeitglieder "G" 7 - 11, Zusatz-Laufzeitglieder "Z" 12 und 13, Anordnungen 14 - 19 zur Ableitung von Impulsen I11 - I16, UND-Gatter 20 - 25 und 32 -37, SR-Flipflops 26 - 31 und ein ODER-Gatter 38.

Ein Eingang 2 empfängt eine Taktfrequenz T1, die geringfügig von der Bitfolgefrequenz eines Digitalsignals D1 am Eingang 1 abweichen und eine beliebige Phasenlage gegenüber dieser aufweisen kann.

Das Digitalsignal D1 wird an den D-Eingang des D-Flipflops 6 angelegt. Die ansteigenden Flanken des Digitalsignals D1 seien die wirksamen Flanken. In der Anordnung 4 werden aus diesen Abfrageimpulse I21 abgeleitet, deren Dauer klein gegen eine Taktperiode T aber groß genug ist, daß über sie logische Elemente angesteuert werden können. In der Anordnung 5 werden aus den wirksamen Flanken des Digitalsignals D1 weiter Rücksetzimpulse RI entsprechender Dauer abgeleitet und den R-Eingängen aller SR-Flipflops 26 - 31 zugeführt. Der Takt T1 wird in die Laufzeitkette 7 - 13 eingespeist. Diese enthält Grund-Laufzeitglieder "G" 7 - 11 und Zusatz-Laufzeitglieder "Z" 12 und 13. Sie weisen eine Grund- bzw. Zusatzlaufzeit $\Delta$ t1 = T/6 auf. Jedes Grundlaufzeitglied "G" leitet aus den wirksamen Flanken der Takte T1 bis T6 kurze Impulse I11 bis I16 ab, deren Dauer größer als eine Grundlaufzeit $\Delta$ t1 und auch bei großen Werten von n groß genug ist, daß über sie logische Elemente angesteuert werden können. Die Impulse I11 - I16 werden jeweils an einen ersten Eingang der UND-Gatter 20 - 25 angelegt. Die zweiten Eingänge sind mit dem Ausgang der Anordnung 4 verbunden. Trifft von diesem ein Abfrageimpuls I21 ein, dann wird der oder werden die gerade vorhandenen Impulse aus der Folge I11 - I16 durchgeschaltet und gelangen an den Setzeingang S der SR-Flipflops 26 - 31, die kurz vorher mit einem Rücksetzimpuls RI zurückgesetzt worden waren. Die $\overline{Q}$-Ausgänge dieser RS-Flipflops 26 - 31 sind an die ersten Eingänge der UND-Gatter 32 - 37 angeschlossen, deren zweite Eingänge mit Taktausgängen der Grund-Laufzeitglieder "G" 8 - 11 und der Zusatz-Laufzeitglieder "Z" 12 und 13 verbunden sind. Die Takte T3 - T8 wurden für die Weiterverarbeitung in F1 - F6 umbenannt. Die Ausgänge der UND-Gatter 32 - 37 sind mit den Eingängen des ODER-Gatters 38 und dessen Ausgang ist wiederum mit dem Takteingang des D-Flipflops 6 verdrahtet.

Alle Elemente in dieser Anordnung weisen Laufzeiten auf. Durch den Zeitversatz zwischen dem Auftreten der Signale an den beiden Eingängen der UND-Gatter 32 - 37 kann die Verzögerung zwischen der wirksamen Flanke des Digitalsignals D1 und der des Einlesetaktes Te am Takteingang des D-Flipflops 6 derart eingestellt werden, daß sie T/2 bei jedem neu ankommenden Impuls des Digitalsignals D1 beträgt. Das abgehende Digitalsignal D2 besteht somit nur aus richtig abgetasteten Impulsen.

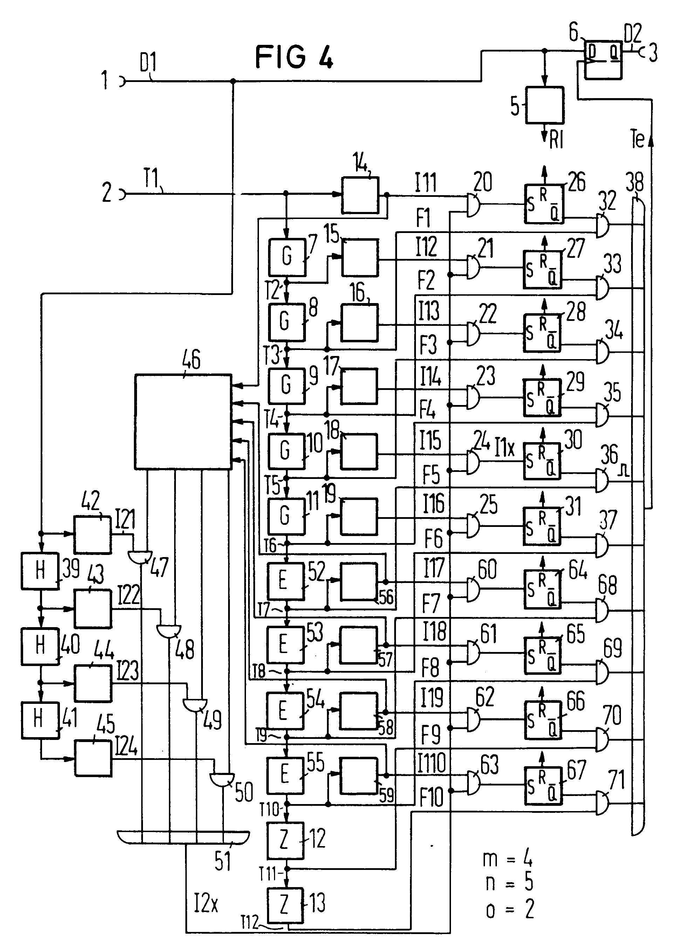

Fig. 4 zeigt ein Prinzipschaltbild einer Anordnung zur Durchführung des Verfahrens bei schwankenden Laufzeiten. Die Anordnung enthält alle Elemente der Anordnung nach Fig. 3. Zusätzlich umfaßt sie Hilfs-Laufzeitglieder "H" 39 - 41, Anordnungen 42 - 45 zur Ableitung von Abfrageimpulsen I21 - I24, eine Taktperioden-Meßeinrichtung 46, UND-Gatter 47 - 50, 60 - 63 und 68 - 71, Ergänzungs-Laufzeitglieder "E" 52 - 55, Anordnungen 56 - 59 zur Ableitung von Impulsen I17 - I110, SR-Flipflops 64 - 67 und ein ODER-Gratter 51.

EP 0 363 513 B1

Bei maximaler laufzeit Δ t1 reichen die Grund-Laufzeitglieder "G" aus. bei minimaler laufzeit muß die Anzahl der Ergänzungs-Laufzeitglieder "E" derart gewählt werden, daß längs der Laufzeitglieder dieser beiden Arten noch eine Verzögerung um eine Taktperiode T erfolgt.

Da trotz schwankender Laufzeit die Verzögerung zwischen der wirksamen Flanke des Digitalsignals D1 und der des Einlesetaktes Te eine halbe Taktperiode T/2 betragen soll, wird in den Weg der Signalverarbeitung eine einstellbare Verzögerung der Abfrage eingefügt. Dies wird durch eine stufenweise Verzögerung des Digitalsignals D1 in der Weise erreicht, daß über die Hilfs-Laufzeitglieder "H" 39 - 41 mit Hilfslaufzeiten Δ t2 und die Anordnungen 42 - 45 eine Folge von Abfrageimpulsen I21 - I24 abgeleitet wird.

Die Taktperioden-Meßeinrichtung 46 stellt, wenn in der Anordnung 14 ein Impuls I11 abgeleitet wurde, fest, am Ausgang welcher der Anordnungen 56 - 59 gleichzeitig ein Impuls anliegt. Je nach dem Ergebnis wird entweder über das UND-Gatter 47 ein Abfrageimpuls I21 oder über eines der UND-Gatter 48 - 50 ein gegenüber dem Abfrageimpuls I21 verzögerter Abfrageimpuls I22, I23 oder I24 als Abfrageimpuls I2x durchgeschaltet. Dieser gelangt dann über das ODER-Gatter 51 zu den zweiten Eingängen der UND-Gatter 20 - 25 und 60 - 63. Das Verfahren läuft dann weiter so ab, wie es bereits anhand der Fig. 3 beschrieben wurde.

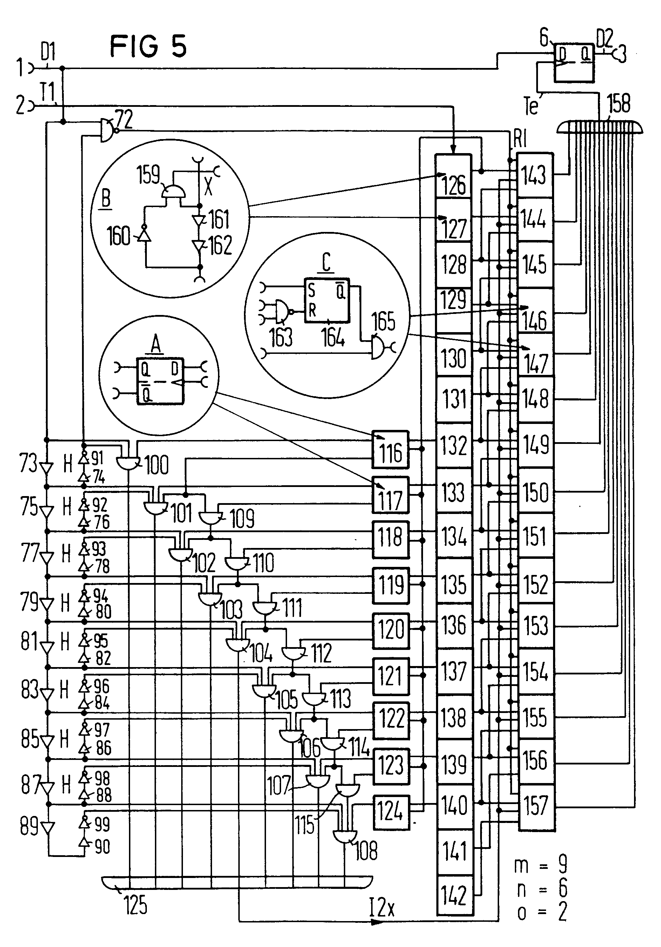

Fig. 5 zeigt eine praktische Anordnung zu dem Prinzipschaltbild der Fig. 4. Die Anordnung enthält ein NAND-Gatter 72, nicht invertierende Gatterelemente 73 - 90 und invertierende Gatterelemente 91 - 99 jeweils zur Zeitverzögerung, UND-Gatter 100 - 115, D-Flipflops "A" 116 - 124, ein ODER-Gatter 125, Schaltungskomplexe "B" 126 - 142, Schaltungskomplexe "C" 143 -157, ein ODER-Gatter 158 und das D-Flipflop 6.

Der Schaltungskomplex "B" enthält ein UND-Gatter 159, ein invertierendes Gatterelement 160 zur Verzögerung und nichtinvertierende Gatterelemente 161 und 162 zur Verzögerung. Der untere Anschluß ist mit dem nicht dargestellten oberen Anschluß des nachfolgenden Schaltungskomplexes "B" 126 verbunden. Die Schaltungskomplexe 126 - 142 sind entsprechend untereinander verbunden.

Der Schaltungskomplex "C" enthält ein NAND-Gatter 163, ein SR-Flipflop 164 und ein UND-Gatter 165.

Bei dem D-Flipflop "A" und den Schaltungskomplexen "B" und "C" sind die Anschlüsse im Schaltplan geometrisch in gleicher Weise angeordnet wie bei den "black boxes" 116 - 124, 126 - 142 und 143 - 157.

Die Schaltungskomplexe "B" und "C" wirken wie die Elemente 7 - 37 und 52 - 71 in Fig. 4. Die Gatter 73,75,77,79,81,83,85 und 87 bilden eine achtgliedrige Hilfs-Laufzeitkette. Die nicht invertierenden Gatter 74,76,78,80,82,84,86,88 und 90 und die invertierenden Gatter 91 - 99 ergeben mit den UND-Gattern 100 - 108 bezüglich deren zwei linken Eingängen jeweils eine Anordnung zur Bildung eines Abfrageimpulses. In den D-Flipflops "A" 116 - 124 wird der zum Zeitpunkt eines Impulses I11 in den Schaltungskomplexen "B" 132 - 140 vorhandene Impuls I1x an einem Anschluß X eines Schaltungskomplexes "B" oder werden auch zwei solcher Impulse gespeichert. Jedes der UND-Gatter 100 - 108, das sowohl einen Impuls I1x als auch einen Abfrageimpuls I2x empfängt, gibt ein Signal an das ODER-Gatter 125 ab, an dessen Ausgang der Abfrageimpuls I2x mit der gewünschten Verzögerung erscheint. Das NAND-Gatter 72 liefert einen Rücksetzimpuls RI für alle SR-Flipflops 164.

Die UND-Gatter 109 - 115 dienen der Unterdrückung eines zweiten eventuell gespeicherten Impulses I1x. Sind beispielsweise die $\overline{Q}$-Ausgänge der D-Flipflops "A" 116 und 117 im Zustand logisch "1", dann ist auch der Zustand am Ausgang des UND-Gatters 109 logisch "1" und am Ausgang des UND-Gatters 102 kann ein Zustand logisch "1" auftreten. Tritt jetzt am Q-Ausgang des D-Flipflops "A" ein Zustand logisch "0" auf, dann müssen an den Ausgängen der UND-Gatter 110 - 115 entsprechende Zustände herrschen.

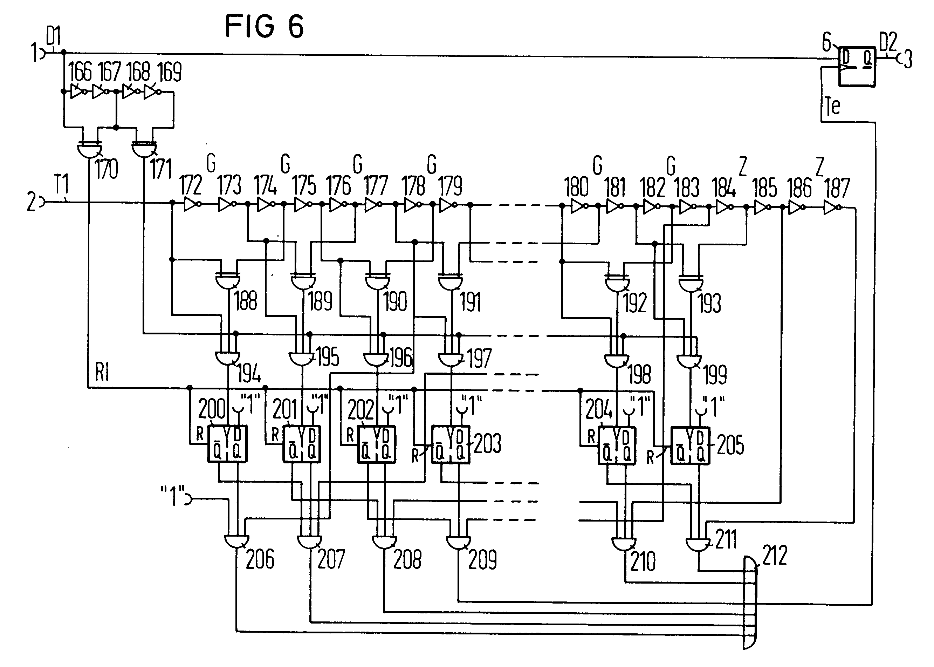

Fig. 6 zeigt ein praktisches Ausführungsbeispiel der Anordnung nach Fig. 3. Die Anordnung enthält invertierende Gatterelemente 166 - 169 und 172 - 187 zur Verzögerung, Exklusiv-ODER-Gatter 170 und 171 sowie 188 - 193, UND-Gatter 194 - 199 und 206 - 211, D-Flipflops 200 - 205, ein ODER-Gatter 212 und das bereits in der Fig. 3 gezeigte D-Flipflop 6.

Das am Eingang 1 anliegende Digitalsignal D1 wird im D-Flipflop 6 mit dem Einlesetakt Te eingelesen und am Ausgang 3 als Digitalsignal D2 entnommen.

Der Rest der Schaltung dient dazu, aus dem am Eingang 2 anlie genden Takt T1 den Einlesetakt Te abzuleiten. Dazu wird der Takt T1 in eine sechzehngliedrige Laufzeitkette 172 - 187 eingespeist, bei der jeweils zwei invertierende Gatterelemente ein Laufzeitglied bilden. Deren Anzahl ist derart gewählt, daß das Taktsignal am Ausgang des invertierenden Gatterselements 183 bei der kleinsten Verzögerungszeit pro Gatterelement immer noch um eine Taktperiode gegenüber dem Taktsignal T1 am Eingang 2 verzögert ist. Die Exklusiv-ODER-Gatter 188 - 193 geben drei-Gatterelement-Verzögerungszeiten-breite Impulse ab, wenn sich der Zustand der Laufzeitkette 172 - 187 in ihrem Bereich ändert. Diese Impulse decken schrittweise den Phasenbereich von 0° - 360° ab.

Das Exklusiv-ODER-Gatter 170 gibt im Zusammenwirken mit den invertierenden Gatterelementen 166 und 167 bei jeder Zustandsänderung des Digitalsignals D1 einen Rücksetzimpuls RI ab, der alle D-Flipflops

4

200 - 205 zurücksetzt. Dadurch weisen alle Q-Ausgänge, die Ausgänge der UND-Gatter 206 - 211 und der Ausgang des ODER-Gatters 212 einen logischen Zustand "0" auf.

Die invertierenden Gatterelemente 168 und 169 sowie das Exklusiv-ODER-Gatter 171 geben einen gegenüber dem Rücksetzimpuls RI verzögerten Abfrageimpuls ab. Von den UND-Gattern 194 - 199 erhält dasjenige am Ausgang einen logischen Zustand "1", bei dem am Eingang des zugehörigen Laufzeitgliedes derselbe Zustand herrscht, wenn der Abfrageimpuls anliegt. Zusätzlich muß am Ausgang des zugehörigen Exklusiv-ODER-Gatters aus den Exklusiv-ODER-Gattern 188 - 193 ein logischer Zustand "1" vorhanden sein, was nur dann der Fall ist, wenn am Ausgang des dritten auf den Eingang des Laufzeitgliedes folgenden invertierenden Gatterelements ein logischer Zustand "0" herrscht.

Geht der Ausgang eines oder mehrerer UND-Gatter 194 - 199 in den Zustand logisch "1" über, dann erhält der Q-Ausgang des nachfolgenden D-Flipflops aus den D-Flipflops 200 - 205 auch einen Zustand logisch "1". Das nachfolgende UND-Gatter aus den UND-Gattern 206 - 211 erhält an seinem Ausgang einen logischen Zustand "1", wenn nicht nur der Q-Ausgang des zugehörigen D-Flipflops, sondern auch der $\overline{Q}$-Ausgang des vorhergehenden D-Flipflops denselben Zustand hat. Zusätzlich muß der logische Zustand am Ausgang des übernächsten Laufzeitgliedes den Zustand logisch "1" haben.

Die Ausgänge der UND-Gatter 206 - 211 werden im ODER-Gatter 212 verknüpft. Haben zwei der UND-Gatter 206 - 211 am Ausgang einen logischen Zustand "1" und beruhen diese auf Taktimpulsen, die gegeneinander um eine Taktperiode verschoben sind, so stört dies nicht.

## Patentansprüche

1. Verfahren zum Empfang eines binären Digitalsignals (D1) unter Verwendung eines Taktsignals (T1), dessen Taktfrequenz in der Phasenlage von der Bitfolgefrequenz des Digitalsignals (D1) abweichen kann,

   **dadurch gekennzeichnet,**

   daß eine Folge von individuellen Taktsignalen (z.B. T2...T8) durch aufeinanderfolgende stufenweise Verzögerung des Taktsignals (T1) um jeweils eine Grundlaufzeit erzeugt wird, daß eine Folge von Impulsen (z.B. I11...I16) aus dem Taktsignal (T1) und individuellen Taktsignalen (z.B. T2...T6), deren gesamte Verzögerung mindestens eine Taktperiode des Taktsignals (T1) umfaßt, abgeleitet wird,

   daß ein Abfrageimpuls (I21) durch Verzögerung des Digitalsignals (D1) erzeugt und individuelle Taktsignale (z.B. T3...T8) bei gleichzeitigem Vorliegen des Abfrageimpulses (I21) und eines abgeleiteten Impulses (z.B. I11...I16) ausgewählt werden, und

   daß ein Einlesetaktsignal (Te) zum Empfang des Digitalsignals (D1) aus den ausgewählten individuellen Taktsignalen (z.B. T3...T8) gebildet wird.

2. Verfahren nach Anspruch 1,

   **dadurch gekennzeichnet,**

   daß zur Erzeugung weiterer individueller Taktsignale (z.B. T9, T10) das um die Grundlaufzeiten verzögerte Taktsignal (T1) stufenweise um jeweils eine Ergänzungslaufzeit verzögert wird.

3. Verfahren nach Anspruch 2,

   **dadurch gekennzeichnet,**

   daß zusätzlich zum Abfrageimpuls (I21) eine Folge von Hilfs-Abfrageimpulsen (I22-I24) aus dem um jeweils eine Hilfslaufzeit stufenweise verzögerten Digitalsignal (D1) abgeleitet wird, und daß aus allen Abfrageimpulsen (I21-I24) der zur Auswahl der individuellen Taktsignale (z.B. T3...T12) verwendete Abfrageimpuls (I2x) ausgewählt wird.

4. Verfahren nach einem der vorhergehenden Ansprüche,

   **dadurch gekennzeichnet,**

   daß Gatterelemente (z.B. 166...169; 172...187; 73...90; 91...99) zur Verzögerung des Taktsignals (T1) und des Digitalsignals (D1) verwendet werden.

5. Verfahren nach einem der vorhergehenden Ansprüche,

   **dadurch gekennzeichnet,**

   daß ein gegenüber dem Digitalsignal (D1) um eine halbe Taktperiode des Taktsignals (T1) phasenversögertes Einlesetaktsignal (Te) gebildet wird.

**6.** Schaltungsanordnung zum Empfang eines binären Digitalsignals (D1) mit einem Taktsignal (T1), dessen Taktfrequenz in der Phasenlage von der Bitfolgefrequenz des Digitalsignals (D1) abweichen kann,

**dadurch gekennzeichnet,**

daß für die Erzeugung von individuellen Taktsignalen (z.B. T1...T8) aus dem Taktsignal (T1) eine Laufzeitkette (z.B. 7...13) mit Grund-Laufzeitgliedern (G), deren Gesamtlaufzeit mindestens eine Taktperiode des Taktsignals (T1) beträgt, und Zusatz-Laufzeitgliedern (Z) vorgesehen ist,

daß Einrichtungen (z.B. 14...19) zur Ableitung von Impulsen (z.B. I11...I16) aus den Taktsignalen (z.B. T1...T6) vorgesehen sind,

daß eine Einrichtung (4) zur Erzeugung eines Abfrageimpulses (I21) durch Verzögerung des Digitalsignals (D1) vorgesehen ist, und

daß an die Einrichtungen (z.B. 14...19) zur Ableitung der Impulse (z.B. I11...I16) und an die Einrichtung (4) zur Erzeugung des Abfrageimpulses (I21) eine Auswahlschaltung zur Bildung eines Einlesetaktsignals (Te) für den Empfang des Digitalsignals (D1) angeschaltet ist.

**7.** Schaltungsanordnung nach Anspruch 6,

**dadurch gekennzeichnet,**

daß die Auswahlschaltung aufweist:

- Schaltglieder (z.B. 20...25) zur jeweiligen Verknüpfung des Abfrageimpulses (I21) mit den individuellen Impulsen (z.B. I11...I16)
- Speicherelemente (z.B. 26...31) mit nachgeschalteten Schaltgliedern (z.B. 32...37), von denen jeweils das Speicherelement (z.B. 30) bei gleichzeitigem Vorliegen des Abfrageimpulses (I21) und eines abgeleiteten Impulses (z.B. I15) einen gespeicherten Zustand liefert, und das zugehörige Schaltglied (z.B. 36) in Abhängigkeit dieses Zustands das individuelle Taktsignal (z.B. T7) an seinen Ausgang durchschaltet, das aus dem Laufzeitglied (z.B. 12) stammt, das dem der Einrichtung (z.B. 18) zur Ableitung des Impulses (z.B. I15) vorgeschalteten Laufzeitglied (z.B. 10) um jeweils zwei Laufzeitglieder nachgeschaltet ist, und
- ein Schaltglied (z.B. 38) zur Verknüpfung der Ausgänge der den Speicherelementen (z.B. 26...31) nachgeschalteten Schaltglieder (z.B. 32...37) zum Einlesetaktsignal (Te) für den Empfang des Digitalsignals (D1).

**8.** Schaltungsanordnung nach Anspruch 6 oder 7,

**dadurch gekennzeichnet**,

daß in der Laufzeitkette (7...13) zwischen den Grund-Laufzeitgliedern (G) und den Zusatz-Laufzeitgliedern (Z) Ergänzungs-Laufzeitglieder (E) zur Erzeugung weiterer individueller Taktsignale (z.B. T9, T10) angeordnet sind, und daß an die Ergänzungs-Laufzeitglieder (E) Einrichtungen (z.B. 56...59) zur Ableitung zusätzlicher Impulse (z.B. I17-I110) angeschaltet sind.

**9.** Schaltungsanordnung nach Anspruch 6,7 oder 8,

**dadurch gekennzeichnet**,

daß eine Hilfs-Laufzeitkette (z.B. 39...41) mit Hilfs-Laufzeitgliedern (H) für die Verzögerung des Digitalsignals (D1) vorgesehen ist,

daß an die Hilfs-Laufzeitglieder (H) Einrichtungen (z.B. 43...45) zur Ableitung von Hilfs-Abfrageimpulsen (z.B. I22-I24) angeschaltet sind, und

daß an die Einrichtungen (z.B. 42...45) zur Ableitung der Abfrageimpulse (z.B. I21...I24) eine Schaltung für die Auswahl eines der Abfrageimpulse (I21...I24) angeschaltet ist.

**10.** Schaltungsanordnung nach den Ansprüchen 8 und 9,

**dadurch gekennzeichnet**,

daß die Schaltung zur Auswahl eines der Abfrageimpulse (I21...I24) eine Taktperioden-Meßeinrichtung (46) zur Festlegung, an welchem Ausgang der Einrichtungen (z.B. 56...59) zur Ableitung zusätzlicher Impulse (z.B. I17-I110) ein Impuls gleichzeitig zu dem aus dem unverzögerten Taktsignal (T1) abgeleiteten Impuls (I11) anliegt, und eine Verknüpfungsschaltung mit Schaltgliedern (z.B. 47...51) für die Auswahl des einen Abfrageimpulses (I2x) aufweist.

**11.** Schaltungsanordnung nach einem der vorhergehenden Ansprüche,

**dadurch gekennzeichnet**,

daß die Speicherelemente (z.B. 26...31) als Flip-Flops mit jeweils einem Rücksetzeingang (R) ausgebildet sind, der jeweils mit einer Einrichtung (5) zur Ableitung eines Rücksetzimpulses (RI) verbunden ist.

**Claims**

1. Method for receiving a binary digital signal (D1) using a clock signal (T1), the clock frequency of which may differ in its phase relation from the bit rate of the digital signal (D1), characterized in that a series of individual clock signals (e.g. T2...T8) is generated by successive step-by-step delaying of the clock signal (T1) by a principal delay in each case, in that a series of pulses (e.g. I11...I16) is derived from the clock signal (T1) and individual clock signals (e.g. T2...T6) whose total delay amounts to at least one clock period of the clock signal (T1), in that a read pulse (I21) is generated by delaying the digital signal (D1) and individual clock signals (e.g. T3...T8) are selected given the simultaneous presence of the read pulse (I21) and a derived pulse (e.g. I11...I16), and in that a read-in clock signal (Te) is formed for receiving the digital signal (D1) from the selected individual clock signals (e.g. T3...T8).

2. Method according to Claim 1, characterized in that, for generating further individual clock signals (e.g. T9, T10), the clock signal (T1) delayed by the principal delays is delayed step-by-step by a supplementary delay in each case.

3. Method according to Claim 2, characterized in that in addition to the read pulse (I21), a series of auxiliary read pulses (I22-I24) is derived from the digital signal (D1) delayed step-by-step by an auxiliary delay in each case, and in that the read pulse (I2x) used for selecting the individual clock signals (e.g. T3...T12) is selected from all the read pulses (I21-I24).

4. Method according to one of the preceding claims, characterized in that gate elements (e.g. 166...169; 172...187; 73...90; 91...99) are used to delay the clock signal (T1) and the digital signal (D1).

5. Method according to one of the preceding claims, characterized in that a read-in clock signal (Te) is formed whose phase is delayed by half a clock period of the clock signal (T1) with respect to the digital signal (D1).

6. Circuit arrangement for receiving a binary digital signal (D1) with a clock signal (T1), the clock frequency of which may differ in its phase relation from the bit rate of the digital signal (D1), characterized in that a delay line (e.g. 7...13) with principal delay units (G) whose total delay amounts to at least one clock period of the clock signal (T1) and additional delay units (Z) is provided for generating individual clock signals (e.g. T1...T8) from the clock signal (T1), in that arrangements (e.g. 14...19) for deriving pulses (e.g. I11...I16) from the clock signals (e.g. T1...T6) are provided, in that an arrangement (4) for generating a read pulse (I21) by delaying the digital signal (D1) is provided, and in that a selection circuit for forming a read-in clock signal (Te) for receiving the digital signal (D1) is connected to the arrangements (e.g. 14...19) for deriving the pulses (e.g. I11...I16) and to the arrangement (4) for generating the read pulse (I21).

7. Circuit arrangement according to Claim 6, characterized in that the selection circuit contains:
   - logic elements (e.g. 20...25) for the respective gating of the read pulse (I21) with the individual pulses (e.g. I11...I16),
   - storage elements (e.g. 26...31) with downstream logic elements (e.g. 32...37), of which in each case the storage element (e.g. 30) supplies a stored state given the simultaneous presence of the read pulse (I21) and a derived pulse (e.g. I15) and, depending on said state, the associated logic element (e.g. 36) connects through the individual clock signal (e.g. T7) to its output which originates from the delay unit (e.g. 12) that is connected downstream by two delay units in each case of the delay unit (e.g. 10) connected upstream of the arrangement (e.g. 18) for deriving the pulse (e.g. I15), and
   - a logic element (e.g. 38) for gating the outputs of the logic elements (e.g. 32...37) connected downstream of the storage elements (e.g. 26...31) with the read-in clock signal (Te) for receiving the digital signal (D1).

8. Circuit arrangement according to Claim 6 or 7, characterized in that supplementary delay units (E) for generating further individual clock signals (e.g. T9, T10) are arranged in the delay line (7...13) between the principal delay units (G) and the additional delay units (Z), and in that arrangements (e.g. 56...59) for deriving additional pulses (e.g. I17...I110) are connected to the supplementary delay units (E).

9. Circuit arrangement according to Claim 6, 7 or 8, characterized in that an auxiliary delay line (e.g. 39...41) with auxiliary delay units (H) for delaying the digital signal (D1) is provided, in that arrangements (e.g. 43...45) for deriving auxiliary read pulses (e.g. I22...I24) are connected to the auxiliary delay units (H), and in that a circuit for selecting one of the read pulses (I21...I24) is connected to the arrangements (e.g. 42...45) for deriving the read pulses (e.g. I21...I24).

10. Circuit arrangement according to Claims 8 and 9, characterized in that the circuit for selecting one of the read pulses (I21...I24) contains a clock period measurement device (46) for determining at which output of the arrangements (e.g. 56...59) for deriving additional pulses (e.g. I17-I110) a pulse is present at the same time as the pulse (I11) derived from the non-delayed clock signal (T1), and a gate circuit with logic elements (e.g. 47...51) for selecting the one read pulse (I2x).

11. Circuit arrangement according to one of the preceding claims, characterized in that the storage elements (e.g. 26...31) are designed as flip-flops with a reset input (R) in each case which is connected to an arrangement (5) for deriving a reset pulse (RI) in each case.

**Revendications**

1. Procédé pour recevoir un signal numérique linéaire (D1) moyennant l'utilisation d'un signal de cadence (T1), dont la fréquence de cadence peut être différente de la position de phase de la fréquence de récurrence des bits du signal numérique (D1),
caractérisé par le fait
qu'une suite de signaux de cadence individuels (par exemple T2...T8) est produite par retardement échelonné successif du signal de cadence (T1), respectivement d'un retard de base, qu'une suite d'impulsions (par exemple I11...I16) est dérivée du signal de cadence (T1) et de signaux individuels de cadence (par exemple T2...T6), dont le retard total s'étend sur au moins une période de cadence du signal de cadence (T1),
qu'une impulsion d'interrogation (I21) est produite par retardement du signal numérique (D1) et que les signaux individuels de cadence (par exemple T3...T8) sont sélectionnés dans le cas de la présence simultanée de l'impulsion d'interrogation (I21) et d'une impulsion dérivée (par exemple I11...I16), et
un signal de cadence de lecture (Te) est formé pour la réception du signal numérique (D1) à partir des signaux de cadence individuels sélectionnés (par exemple T3...T8).

2. Procédé suivant la revendication 1, caractérisé par le fait que pour la production d'autres signaux de cadence individuels (par exemple T9, T10), le signal de cadence (T1) retardé du retard de base est retardé de façon échelonnée respectivement d'un retard complémentaire.

3. Procédé suivant la revendication 2, caractérisé par le fait qu'en plus de l'impulsion d'interrogation (I21), une suite d'impulsions auxiliaire d'interrogations (I22-I24) est dérivée du signal de données (D1) retardé de façon échelonnée respectivement d'une durée de propagation auxiliaire, et que l'impulsion d'interrogation (I2x), utilisée pour la sélection des signaux individuels de cadence (par exemple T3...T12), est sélectionnée à partir de l'ensemble des impulsions d'interrogation (I21-I24).

4. Procédé suivant l'une des revendications précédentes, caractérisé par le fait qu'on utilise des éléments formant portes (par exemple 166...169; 172...187; 73...90; 91...99) pour retarder le signal de cadence (C1) et le signal numérique (D1).

5. Procédé suivant l'une des revendications précédentes, caractérisé par le fait qu'un signal de cadence de lecture (Te), dont la Phase est retardée par rapport au signal numérique (D1) d'une demi-période de cadence du signal de cadence (T1), est formé.

6. Montage pour la réception d'un signal numérique binaire (D1) avec un signal de cadence (Te), dont la fréquence de cadence peut différer dans la position de phase par rapport à la fréquence de récurrence des bits du signal numérique (1), caractérisé par le fait
que pour la production de signaux individuels de cadence (par exemple T1...T8) à partir du signal de cadence (T1), il est prévu une chaîne à retard (par exemple 7...13) comportant des circuits (G)

8

produisant un retard de base, dont le retard total s'étend au moins sur une période de cadence du signal de cadence (T1), et des circuits de retardement supplémentaires (Z),

que des dispositifs (par exemple 14...19) sont prévus pour dériver des impulsions (par exemple I11...I16) à partir des signaux de cadence (par exemple T1...T6),

qu'un dispositif (4) est prévu pour la production d'une impulsion d'interrogation (I21) par retardement du signal numérique (D1), et

qu'aux dispositifs (par exemple 14...19) servant à dériver les impulsions (par exemple I11...I16) et au dispositif (4) servant à produire l'impulsion d'interrogation (I21) sont raccordés un circuit de sélection servant à former un signal de cadence de lecture (Te) pour la réception du signal numérique (D1).

7.  Montage suivant la revendication 6, caractérisé par le fait que le circuit de sélection comprend :
    - des circuits de commutation (par exemple 20...25) servant à combiner respectivement l'impulsion d'interrogation (I21) aux impulsions individuelles (par exemple I11...I16),
    - des éléments de mémoire (par exemple 26...31) en aval desquels sont branchés des circuits de commutation (par exemple 32...37), et parmi lesquels respectivement l'élément de mémoire (par exemple 30) délivre un état mémorisé, lors de la présence simultanée de l'impulsion d'interrogation (I21) et une impulsion dérivée (par exemple I15), et le signal de commutation associé (par exemple 36) transmettant à sa sortie, en fonction de cet état, le signal individuel de cadence (par exemple T7), qui est délivré par le circuit de retardement (par exemple 12), qui est branché, en en étant décalé respectivement de deux circuits de retardement, en aval du circuit de retardement (par exemple 10), qui est branché en amont du dispositif (par exemple 18) servant à dériver l'impulsion (par exemple I15), et
    - un circuit de commutation (par exemple 38) servant à combiner les sorties des circuits de commutation (par exemple 32...37) branchés en aval des éléments de mémoire (par exemple 26...31), au signal de cadence de lecture (Te) pour la réception du signal numérique (D1).

8.  Montage suivant la revendication 6 ou 7, caractérisé par le fait que des circuits de retardement complémentaires (E) servant à produire d'autres signaux individuels de cadence (par exemple T9, T10) sont disposés dans la chaîne à retard (7...13), entre les circuits (G) produisant un retard de base et les circuits de retardement supplémentaires (Z) et que des dispositifs (par exemple 56...59) servant à dériver des impulsions supplémentaires (par exemple I17-I110) sont raccordés au circuit de retardement complémentaires (E).

9.  Montage suivant la revendication 6, 7 ou 8, caractérisé par le fait qu'il est prévu une chaîne à retard auxiliaire (par exemple (39...41) comportant des circuits de retardement auxiliaires (H) servant à retarder le signal numérique (D1), que des dispositifs (par exemple 43...45) servant à dériver des impulsions d'interrogation auxiliaires (par exemple I22-I24) sont raccordées aux circuits de retardement auxiliaires (H), et qu'un circuit servant à sélectionner l'une des impulsions d'interrogation (I21...I24) est raccordé aux dispositifs (par exemple 40...45) servant à dériver les impulsions d'interrogation (par exemple I21...I24).

10. Montage suivant les revendications 8 et 9, caractérisé par le fait que le circuit servant à sélectionner l'une des impulsions d'interrogation (I21...I24) comporte un dispositif (46) de mesure des périodes de cadence, qui sert à déterminer à quelle sortie des dispositifs (par exemple 56...59) utilisés pour l'obtention d'impulsions supplémentaires (par exemple I17-I110) est appliquée une impulsion, en même temps que l'impulsion (I) dérivée du signal de cadence non retardé (T), et un circuit combinatoire comportant des circuits de commutation (par exemple 47...51) pour la sélection d'une impulsion d'interrogation (I2x).

11. Montage suivant l'une des revendications précédentes, caractérisé par le fait que les éléments de mémoire (par exemple 26...31) sont réalisés sous la forme de bascules bistables comportant chacune une entrée de remise à l'état initial (R), qui est raccordée respectivement à un dispositif (5) servant à dériver une impulsion de remise à l'état initial (RI).

# FIG 1

# FIG 2

# FIG 3

FIG 4

m = 4
n = 5
o = 2

# FIG 5

m = 9
n = 6
o = 2

FIG 6